(19) Europäisches Patentamt
European Patent Office
Office européen des brevets

(11) **EP 4 339 586 B1**

(12) **EUROPÄISCHE PATENTSCHRIFT**

(45) Veröffentlichungstag und Bekanntmachung des Hinweises auf die Patenterteilung:
**13.11.2024   Patentblatt 2024/46**

(21) Anmeldenummer: **22196389.5**

(22) Anmeldetag: **19.09.2022**

(51) Internationale Patentklassifikation (IPC):
*G01N 3/56* (2006.01)     *G01N 3/08* (2006.01)
*G01N 3/04* (2006.01)

(52) Gemeinsame Patentklassifikation (CPC):
**G01N 3/04; G01N 3/08;** G01N 2203/0048;
G01N 2203/024

(54) **MEDIUM-BEANSPRUCHUNGS-PRÜFEINRICHTUNG**

MEDIUM STRESS TESTING DEVICE

DISPOSITIF DE TEST DE CONTRAINTE DE MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.03.2024   Patentblatt 2024/12**

(73) Patentinhaber: **SincoTec Holding GmbH**
**38678 Clausthal-Zellerfeld (DE)**

(72) Erfinder:
• **Henze, Sven**
**38678 Clausthal-Zellerfeld (DE)**
• **Krause, Steffen**
**38678 Clausthal-Zellerfeld (DE)**
• **Heß, Marcel**
**38678 Clausthal-Zellerfeld (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
**EP-B1- 3 505 907     CN-A- 103 323 337**
**DE-A1- 2 027 306**

**Beschreibung**

## TECHNISCHES GEBIET DER ERFINDUNG

Die mechanischen Eigenschaften eines mechanisch beaufschlagten Bauteils können verändert oder beeinträchtigt werden, wenn das Bauteil mit einem unter Umständen aggressiven Medium, beispielsweise einem Fluid, einer Flüssigkeit oder einem Gas, beaufschlagt wird. Dies wird im Folgenden für die Beaufschlagung eines Bauteils mit einem Medium mit einer beliebigen Konzentration von Wasserstoff erläutert, wobei das erfindungsgemäße Anwendungsgebiet nicht eingeschränkt ist auf die Ausgestaltung des Mediums als Wasserstoff. Wasserstoff führt zu einer Degradation der mechanischen Eigenschaften eines Werkstoffs, die sich beispielsweise in einer reduzierten Duktilität äußert, die auch als Werkstoffversprödung oder "Hydrogen Embrittlement" bezeichnet wird. Je nach Konzentration des Wasserstoffs kann auch eine Beeinträchtigung der Festigkeit des Werkstoffs erfolgen. Derartige Degradationen können dann (je nach Art und Richtung der mechanischen Beanspruchung) zu spröden Werkstofftrennungen kommen, die auch als wasserstoffunterstützte Rissbildung bezeichnet werden. Um lediglich ein die Erfindung nicht beschränkendes Beispiel zu nennen, bei welcher die Degradation der Werkstoffeigenschaften durch Wasserstoff eine Rolle spielt, werden Druckspeicher, Tanks, Tankventile, Befüllstutzen, Druckregelventile, Sicherheitsventile, Rohrleitungen, Pumpen u. ä. genannt, bei denen Bauteile und Oberflächen mit Wasserstoff beaufschlagt sein können. So müssen beispielsweise Tanks mit Wasserstoff, der als Treibstoff für mittels Brennstoffzellen betriebene Fahrzeuge dient, tiefkalt in verflüssigter Form oder unter Verdichtung auf einen Hochdruck beispielweise im Bereich von 350 bar bis 700 bar gefüllt werden, womit das Material des Tanks nicht nur dem Wasserstoff ausgesetzt ist, sondern auch mechanisch infolge der Spannungen in den Wandungen des Tanks infolge des hohen Innendrucks beansprucht ist. Im Betrieb der Tanks darf es nicht zu einer Beeinträchtigung der Abdichtung des Tanks, beispielsweise infolge von Rissen, kommen. sind Prüfeinrichtungen zu entnehmen, mittels welcher der Einfluss von Wasserstoff auf Wasserstoff führende Bauteile oder hierfür eingesetzte Materialien geprüft werden kann, womit gewährleistet werden kann, dass die Bauteile oder aus den Materialien hergestellte Bauteile die gesetzlichen Vorgaben erfüllen und die erforderlichen mechanischen Eigenschaften (trotz einer etwaigen Degradation) aufweisen. Mit den Prüfeinrichtungen können Festigkeitsprüfungen, Dichtheitsprüfungen, Nachweise der Lebensdauer und Berstprüfungen an mit Wasserstoff beaufschlagten Bauteilen durchgeführt werden.

Die Erfindung betrifft eine Medium-Beanspruchungs-Prüfeinrichtung, mittels welcher ein Prüfling, bei dem es sich um ein Bauteil oder eine Materialprobe handeln kann, sowohl einem Medium, insbesondere Wasserstoff unter Druck, als auch einer Beanspruchung, insbesondere einer Wechselbeanspruchung, ausgesetzt wird, um Informationen hinsichtlich einer Veränderung der Materialeigenschaften des Prüflings, insbesondere einer Degradation der mechanischen Eigenschaften, zu gewinnen. Bei der Beanspruchung handelt es sich um eine beliebige mechanische, insbesondere oszillierende Beanspruchung. Während grundsätzlich möglich ist, dass es sich beispielsweise um eine Biege- und/oder Torsionswechselbeanspruchung handelt, ist die Wechselbeanspruchung vorzugsweise eine oszillierende Zug- und Druck-Wechselbeanspruchung. Durchaus möglich ist aber auch, dass eine Überlagerung einer statischen Beanspruchung und einer Wechselbeanspruchung erfolgt und/oder eine Überlagerung mehrerer Wechselbeanspruchungen unterschiedlicher Typen (Torsion, Biegung, Zug- und Druck) erfolgt.

## STAND DER TECHNIK

EP 3 746 762 B1 offenbart eine Prüfeinrichtung für einen tankartigen Druckgasspeicher. Die Prüfeinrichtung weist einen druckfesten Prüfbehälter auf, in dem der zu prüfende Druckgasspeicher angeordnet werden kann, wobei der Prüfbehälter mit einem Prüffluid (beispielsweise Wasser oder eine Hydraulikflüssigkeit auf Mineralölbasis) gefüllt sein kann. Hingegen wird der zu prüfende Druckgasspeicher mit einem gasförmigen Druckgasspeicherfluid (insbesondere ein Inertgas oder Brenngas, bspw. Stickstoff, Helium, Erdgas, Wasserstoff, verdichtete Luft oder Sauerstoff) gefüllt. Sowohl die Prüfvorrichtung als auch der zu prüfende Druckgasspeicher können dabei mit einem Druck von 5 bar bis 2500 bar, vorzugsweise 500 bar bis 1800 bar, insbesondere 900 bar bis 1500 bar, beaufschlagt sein. Das Druckgasspeicherfluid wird dem zu prüfenden Druckgasspeicher über eine Druckgaszuleitung zugeführt, die die Wandung des Prüfbehälters durchsetzt. Für eine Lastwechselprüfung wird der Druckgasspeicher mit dem Druckgasspeicherfluid druckbeaufschlagt, bis der gewünschte Prüfdruck erreicht ist. Während dieser Druckerhöhung liegt an der Außenseite des Druckgasspeichers noch das Prüffluid in dem Prüfbehälter unter Atmosphärendruck an. Die sich ergebende elastische Verformung, die sich aus der Druckdifferenz im Inneren des Druckgasspeichers infolge des Druckgasspeicherfluids und außerhalb des Druckgasspeichers infolge des Prüffluids ergibt, wird gemessen. Hieran anschließend wird der Druck des Prüffluids in der Prüfvorrichtung erhöht, bis die elastische Verformung wieder beseitigt ist. Eine derartige Druckanhebung und -entlastung wird dann entsprechend der gewünschten Zykluszahl (beispielsweise mehr als einhundert Mal oder mehr als fünfhundert Mal) wiederholt. Für die Gewährleistung der erforderlichen Druckänderungen sind Hoch- und Niederdruckpumpen, Zuführventile und Ablassventile erforderlich. Neben einer derartigen Lastwechselprüfung kann mittels derselben Prüfeinrichtung auch ein Berstversuch durchgeführt werden, bei welcher der Druck in dem Druckgasspeicher so lange erhöht wird, bis der Druckgasspeicher birst. In diesem Fall dient der Prüfbehälter mit dem darin angeordneten Prüffluid als Abschirmung.

CN 103 323 337 A offenbart eine Medium-Beanspruchungs-Prüfeinrichtung mit zwei Beaufschlagungsstangen, welche jeweils endseitig mit einem Prüfling verbunden sind. Die Beaufschlagungsstangen und der Prüfling sind in einer Prüfkammer eines Prüfkammergehäuses angeordnet. Zur Ermöglichung der erforderlichen Relativbewegungen bei der Applikation der Prüflast sind die Beaufschlagungsstangen über Gleitdichthülsen gegenüber dem Prüfkammergehäuse geführt und abgedichtet.

DE 20 27 306 A1 offenbart eine Prüfeinrichtung, bei der mehrere stangenförmige Prüflinge in mechanischer Reihenschaltung über Verbindungsstücke zu einem Prüflingstrang miteinander verbunden sind. Der Prüflingstrang erstreckt sich durch ein Rohr, wobei ein Endbereich des Rohrs mit dem zugeordneten Endbereich des Prüflingstrangs fest verbunden ist. Der Prüflingstrang und das Rohr befinden sich in einem Gefäß. Der nicht mit dem Prüflingstrang verbundene Endbereich des Rohrs ist an einem Deckel des Gefäßes fixiert. Eine Zugstange ist mit dem freien Endbereich des Prüflingstrangs gekoppelt. Die Zugstange erstreckt sich durch eine Bohrung des Deckels und eine gegenüber dem Deckel abgedichtete Anschlusshülse zu einem Betätigungskolben. Das Rohr verfügt über Bohrungen. Wird das Gefäß mit einer korrodierenden Lösung gefüllt, die auf eine hohe Temperatur erhitzt wird, beaufschlagt der Druck des entstehenden Sattdampfes (über die Bohrungen des Rohrs, den Innenraum des Rohrs, einen Zwischenraum zwischen der Zugstange und dem Deckel des Gefäßes sowie zwischen der Anschlusshülse und der Zugstange) den Kolben, der eine Zugkraft auf die Zugstange und damit den Prüflingstrang ausübt. Der Prüflingstrang und dessen Prüflinge werden somit einerseits der korrodierenden Lösung ausgesetzt und andererseits einer Zugkraft, deren Betrag von dem Druck des Sattdampfes abhängt.

## AUFGABE DER ERFINDUNG

Der Erfindung liegt die Aufgabe zugrunde, eine Medium-Beanspruchungs-Prüfeinrichtung vorzuschlagen, mit der ein Prüfling sowohl mit einem insbesondere unter Druck stehenden Medium, beispielsweise Wasserstoff, als auch mit einer mechanischen Beanspruchung beaufschlagt werden kann und mittels welcher Erkenntnisse hinsichtlich der mechanischen Eigenschaften, der Beständigkeit und/oder Degradation des Prüflings infolge dieser Beaufschlagungen gewonnen werden können. Insbesondere soll die Medium-Beanspruchungs-Prüfeinrichtung hinsichtlich

- der Gestaltung der Beanspruchung oder Wechselbeanspruchung (beispielsweise hinsichtlich der Beanspruchungsamplituden und/oder Beanspruchungsfrequenz) und/oder
- des eingesetzten Aktuators zur Erzeugung der Beanspruchung und/oder
- der Gewährleistung der Abdichtung des Mediums und/oder
- des Aufwand und der Kosten der Medium-Beanspruchungs-Prüfeinrichtung und
- der Durchführung der Prüfungen und/oder
- des konstruktiven Aufwands

verbessert werden.

## LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

## BESCHREIBUNG DER ERFINDUNG

Die Erfindung schlägt eine Medium-Beanspruchungs-Prüfeinrichtung vor. Die Medium-Beanspruchungs-Prüfeinrichtung verfügt über ein Prüfkammergehäuse, welches eine Prüfkammer aufweist. In der Prüfkammer kann ein Prüfling mit einem Medium (insbesondere unter Druck, beispielsweise Wasserstoff) beaufschlagt werden. Gleichzeitig wird der Prüfling in der Prüfkammer mit einer mechanischen Beanspruchung, insbesondere einer Wechselbeanspruchung, vorzugsweise einer oszillierenden Druck- und Zugbeanspruchung, beaufschlagt. Bei dem Prüfling kann es sich um ein zu prüfendes Bauteil handeln. Möglich ist aber auch, dass der Prüfling als Probe aus einem Material besteht, aus welchem ein Bauteil gefertigt werden soll. Beispielsweise kann der Prüfling eine Zugprobe (unter Umständen auch in einer grundsätzlich bekannten Gestaltung der Zugprobe oder in einer in den Normen für Zugproben oder andere Proben festgelegter Gestaltung) aus einem Material sein, aus welchem später ein Bauteil wie beispielsweise ein Wasserstoffspeicher oder Tank hergestellt wird.

Die Medium-Beanspruchungs-Prüfeinrichtung verfügt über zwei Beaufschlagungsstangen. Die Beaufschlagungsstangen sind jeweils in einem Endbereich fest mit einem Endbereich des Prüflings verbunden. In dem anderen Endbereich sind die Beaufschlagungsstangen fest mit einer zugeordneten Kraftübertragungseinrichtung verbunden.

Bei der Kraftübertragungseinrichtung kann es sich bspw. um einem Flansch, einen Beaufschlagungskopf oder einen anderweitigen Kopplungskörper handeln. Um lediglich ein Beispiel zu nennen, kann eine Kraftübertragungseinrichtung fest in der Art eines Festlagers an einem Prüftisch gehalten sein, während die andere Kraftübertragungseinrichtung mit einem Aktuator verbunden sein kann, der die Beanspruchung oder Wechselbeanspruchung erzeugt, die dann zwischen den beiden Kraftübertragungseinrichtungen und damit (zumindest mit einer Teilkomponente) auf den Prüfling wirkt. Möglich ist aber auch, dass beide Kraftübertragungseinrichtungen als Aktuator ausgebildet sind. Vorzugsweise handelt es sich bei einem derartigen Aktuator um einen Aktuator, der eine oszillierende Zug- und Druckkraft erzeugt.

Die erfindungsgemäße Medium-Beanspruchungs-Prüfeinrichtung weist darüber hinaus Dichthülsen auf. Die Dichthülsen sind in einem Endbereich unter Abdichtung fest mit dem Prüfkammergehäuse verbunden. In dem anderen Endbereich sind die Dichthülsen unter Abdichtung fest mit der zugeordneten Kraftübertragungseinrichtung verbunden.

Durch die Dichthülsen erstrecken sich die Beaufschlagungsstangen hindurch. Zwischen den Beaufschlagungsstangen und den Dichthülsen ist ein insbesondere hohlzylinderförmiger Zwischenraum (der unter Umständen auch nur eine sehr kleine radiale Erstreckung aufweist) ausgebildet. Die zwischen den Beaufschlagungsstangen und den jeweils zugeordneten Dichthülsen gebildeten beiden Zwischenräume münden auf beiden Seiten in die Prüfkammer ein.

Erfindungsgemäß sind die Prüfkammer und die Zwischenräume gegenüber der Umgebung abgedichtet, was vorzugsweise über die Prüfkammer-Dichteinrichtungen und die Kraftübertragungseinrichtungs-Dichteinrichtungen erfolgt.

Die erfindungsgemäße Ausgestaltung beruht insbesondere auf der Erkenntnis, dass die Beaufschlagung des Prüflings mit dem Medium, unter Umständen unter hohen Drücken, eine gute Abdichtung der mit dem Medium beaufschlagten Prüfkammer erfordert. Dies wäre besonders einfach, wenn die Prüfkammer mit dem darin angeordneten Prüfling vollständig geschlossen und gekapselt wäre. Dazu müssten auch die Aktuatoren mit den Beaufschlagungsstangen zwischen den Aktuatoren und dem Prüfling im Inneren der gekapselten Prüfkammer angeordnet sein, was aus Bauraumgründen nicht möglich oder nachteilig ist. Sind hingegen die Aktuatoren außerhalb des Prüfkammergehäuses angeordnet, ist erforderlich, dass die Beaufschlagungsstangen, die den Aktuator mit dem Prüfling verbinden, durch Öffnungen des Prüfkammergehäuses in das Innere der Prüfkammer geführt sind. Dies erfordert eine aufwändige Abdichtung des Prüfkammergehäuses gegenüber den Beaufschlagungsstangen. Erschwerend kommt hinzu, dass infolge der (Wechsel-)Beanspruchung der Beaufschlagungsstangen und der sich dadurch ergebenden elastischen Verformungen des Prüflings und der Beaufschlagungsstangen der Kontaktbereich der Beaufschlagungsstangen mit den Dichtungen unter Umständen sehr kleine (für eine Wechselbeanspruchung oszillierende) Bewegungen ausführt, was zu Beschädigungen der Kontaktfläche und/oder der Dichtungen führen kann, womit dann aber die erforderliche Abdichtung nicht mehr gewährleistet ist oder ein hohe Kosten und hohen Aufwand verursachender regelmäßiger Austausch erforderlich ist.

Erfindungsgemäß wird eine derartige Abdichtung zwischen den Beaufschlagungsstangen im Bereich des Prüfkammergehäuses und dem Prüfkammergehäuse vermieden. Vielmehr geht die Prüfkammer ohne Abdichtung über in die Zwischenräume zwischen den Beaufschlagungsstangen und den Dichthülsen. Es wird somit erfindungsgemäß hingenommen, dass das unter Druck stehende Medium nicht lediglich in dem Prüfkammergehäuse, nämlich in der Prüfkammer wirkt, sondern auch außerhalb derselben in den Zwischenräumen. Die Abdichtung erfolgt in diesem Fall dann im Bereich der Kraftübertragungseinrichtungen durch Abdichtung der Dichthülsen gegenüber den Kraftübertragungseinrichtungen. Vorteilhaft hieran ist, dass in dem Verbindungsbereich der Dichthülsen mit den Kraftübertragungseinrichtungen keine oder reduzierte Relativbewegungen zwischen den Dichthülsen und den Kraftübertragungseinrichtungen auftreten, womit die Abdichtung vereinfacht wird und Beeinträchtigungen der Dichtwirkungen vermieden sind.

Möglich ist, dass die Dichthülsen grundsätzlich hinsichtlich ihrer Erweiterung der Prüfkammer auf die Zwischenräume einem Faltenbalg entsprechen, dessen einer Endbereich unter Abdichtung an dem Prüfkammergehäuse angebunden ist und dessen anderer Endbereich unter Abdichtung an der Kraftübertragungseinrichtung angebunden ist. Da ein derartiger Faltenbalg aber nicht dem in dem Zwischenraum wirkenden Druck des Mediums ausgesetzt werden kann, ist dieser Faltenbalg mit einer mechanischen Steifigkeit ausgestattet, indem eine Dichthülse verwendet wird. Die mechanische Festigkeit der Dichthülse muss dabei so ausgelegt werden, dass diese der auf sie wirkenden Beanspruchung und überlagert hierzu dem an der Innenflächen wirkenden Druck des Mediums dauerhaft ausgesetzt werden kann.

Möglich ist, dass die Abdichtung zwischen der Dichthülse und der Kraftübertragungseinrichtung einerseits und/oder der Dichthülse und dem Prüfkammergehäuse durch eine feste Verbindung, eine Verklebung, Verschweißung, eine aushärtende Dichtmasse, ein beliebiges Dichtelement u. ä. herbeigeführt wird. Vorzugsweise findet für diese Abdichtung eine Kraftübertragungseinrichtungs-Dichteinrichtung bzw. eine Prüfkammer-Dichteinrichtung Einsatz.

Für einen weiteren Vorschlag der Erfindung ist mindestens eine Dichthülse über ein Ringspannelement mit dem Prüfkammergehäuse und/oder der Kraftübertragungseinrichtung verbunden. Alternativ oder kumulativ kann mindestens eine Beaufschlagungsstange über ein Ringspannelement mit dem Prüfkammergehäuse und/oder Kraftübertragungseinrichtung verbunden sein. Bei Einsatz eines derartigen Ringspannelements kann einerseits eine zuverlässige Verbindung gewährleistet werden, bei welcher unter Umständen auch die Spannkraft und damit die Stärke der Anpressung und Verbindung einstellbar ist. Des Weiteren ermöglicht ein derartiges Ringspannelement eine lösbare Verbindung, die für eine Montage und Demontage der Medium-Beanspruchungs-Prüfeinrichtung vorteilhaft ist, beispielsweise wenn unterschiedliche Dichthülsen und/oder Beaufschlagungsstangen mit unterschiedlichen Materialien und/oder Durchmessern verwendet werden sollen, ein Austausch einer beschädigten Dichthülse oder Beaufschlagungsstange erfolgen soll oder eine Demontage und Montage für den Austausch eines Prüflings erforderlich ist. Möglich ist auch, dass mindestens eine Dichthülse oder mindestens eine Beaufschlagungsstange über eine hydraulische Spannhülse mit dem Prüfkammergehäuse und/oder der Kraftübertragungseinrichtung verbunden ist.

Vorzugsweise findet eine hydraulische Spannbuchse Einsatz, wie diese bspw. auf der Website etp-gmbh.com als ETP-Buchse angeboten wird. Hierbei handelt es sich um hydraulische Spannbuchsen, bei welchen die Spannbuchse eine Innenkammer aufweist, die mit einem Hydraulikdruck beaufschlagt werden kann, womit eine Vergrößerung des Außendurchmessers der Spannbuchse sowie eine Verringerung des Innendurchmessers der Spannbuchse herbeiführbar ist, so dass mit der hydraulischen Beaufschlagung ein im Inneren der Spannbuchse angeordnetes Bauteil (hier die Dichthülse oder Beaufschlagungsstange) mit dem außerhalb der Spannbuchse angeordneten Bauteil (hier die Kraftübertragungseinrichtung) verbunden werden kann. Der Hydraulikdruck kann dabei über eine hydraulische Druckquelle herbeigeführt werden. Für eine besonders einfache Lösung verfügt die hydraulische Spannbuchse über eine Schraube, deren Stirnfläche als hydraulischer Kolben zur Erhöhung des Drucks dient, wobei die Betätigung des Kolbens durch Einschrauben der Schraube in die Spannbuchse erfolgt. Derartige Spannbuchsen können oft montiert und demontiert werden, zeichnen sich durch einen geringen erforderlichen Bauraum aus, ermöglichen eine schnelle Montage und Demontage lediglich durch Betätigung einer Schraube und stellen eine zuverlässige reibschlüssige Verbindung bereit. Des Weiteren sind derartige Spannbuchsen als Standardkomponenten verfügbar.

Für die Art der Verbindung des Prüflings mit den Beaufschlagungsstangen finden beliebige Verbindungsmöglichkeiten Einsatz, wobei auch eine formschlüssige Befestigung, Verschraubung, Verklebung oder Verschweißung möglich ist. Für einen Vorschlag der Erfindung erfolgt die Verbindung des Prüflings mit den Beaufschlagungsstangen über eine Spanneinrichtung, mittels welcher vorzugsweise jeweils ein Endbereich des Prüflings durch Einspannung quer zur Längserstreckung oder radial hierzu reibschlüssig gespannt ist. Beispielsweise kann die Spanneinrichtung ein grundsätzlich bekanntes Spannfutter sein, wobei vorzugsweise ein Konusspannfutter Einsatz findet. Unter Umständen kann über eine derartige Spanneinrichtung der Prüfling im Bereich der Verbindung mit dem Beaufschlagungsstangen eine glatte Oberfläche ohne Gewinde, Bohrungen, Kerben u. ä. aufweisen, so dass die mechanischen Eigenschaften nicht durch das Gewinde, die Bohrung und etwaige Kerbwirkungen beeinflusst sind und eine gleichmäßige Krafteinleitung von den Beaufschlagungsstangen über die Spanneinrichtung in den Prüfling erfolgen kann.

Möglich ist, dass das Prüfkammergehäuse über eine Schraubverbindung mit mindestens einer Dichthülse oder mindestens einer Beaufschlagungsstange verbunden ist. Hierbei kann die Dichthülse oder die Beaufschlagungsstange in dem Verbindungsbereich ein Außengewinde aufweisen, welches dann mit einem Innengewinde des Prüfkammergehäuses verschraubt werden kann. Alternativ oder kumulativ kann die Kraftübertragungseinrichtung über eine entsprechende Schraubverbindung mit der Dichthülse oder der Beaufschlagungsstange verbunden sein.

Bei Einsatz einer derartigen Schraubverbindung kann unter Umstände ein Gewindespiel der Schraubverbindung nachteilig sein. So kann das Gewindespiel die Abdichtung beeinträchtigen. Des Weiteren kann sich unter Umständen ein Spiel infolge des Gewindespiels ausbilden, welches nachteilig bei einer Wechselbeanspruchung ist. Zur Abhilfe kann gemäß einem Vorschlag der Erfindung die Schraubverbindung mittels einer Sicherungsmutter gesichert und/oder verspannt sein. Hierbei kann die Sicherungsmutter beispielsweise eine Art Kontermutter darstellen.

Die Erfindung schlägt auch eine Medium-Beanspruchungs-Prüfeinrichtung vor, bei der das Prüfkammergehäuse drei Teile aufweist, nämlich ein Prüfkammergehäuse-Mittelteil und zwei Prüfkammergehäuse-Stirnteile. Das Prüferkammergehäuse-Mittelteil weist eine Durchgangsbohrung auf. Durch diese Durchgangsbohrung erstreckt sich der Prüfling. Das Prüfkammergehäuse-Mittelteil begrenzt die Prüfkammer radial nach außen. Durch die Prüfkammergehäuse-Stirnteile erstreckt sich die Dichthülse (und im Inneren hiervon auch die Beaufschlagungsstange) aus der Prüfkammer heraus. Vorzugsweise gewährleistet die Prüfkammer-Dichteinrichtung eine Abdichtung zwischen dem Prüfkammergehäuse-Mittelteil und der Dichthülse.

Für eine derartige Ausgestaltung des Prüfkammergehäuses kann eine beliebige Verbindung des Prüfkammergehäuse-Mittelteils und der Stirnteile erfolgen. Beispielsweise können die Stirnteile jeweils Bohrungen aufweisen, über die dann Befestigungsschrauben mit Gewindebohrungen in dem Prüfkammergehäuse-Mittelteil verschraubt werden können. Für einen besonderen Vorschlag der Erfindung erstrecken sich Spannschrauben durch Bohrungen eines Prüfkammergehäuse-Stirnteils und des Prüfkammergehäuse-Mittelteils in eine Gewindebohrung des anderen Prüfkammergehäuse-Stirnteils, womit diese Spannschrauben eine Art von Zugankern bilden.

Für einen Vorschlag der Erfindung weist die Medium-Beanspruchungs-Prüfeinrichtung einen Kraftsensor auf, der die an einer Kraftübertragungseinrichtung, einer Dichthülse oder einer Beaufschlagungsstange wirkende Beaufschlagungskraft oder Beaufschlagungskraftkomponente erfasst. Das Messsignal des Kraftsensors kann bspw. zur Dokumentation der Prüfung, zur Steuerung des Aktuators und zur Erfassung von Beaufschlagungsfehlern oder Veränderungen des Prüflings verwendet werden.

Des Weiteren ist möglich, dass mindestens ein Dehnungssensor in der Medium-Beanspruchungs-Prüfeinrichtung eingesetzt ist. Hierbei kann ein Dehnungssensor eine Dehnung einer Dichthülse erfassen, wobei beispielsweise ein DMS im Bereich der äußeren Mantelfläche der Dichthülse vorgesehen sein kann. Ebenfalls möglich ist, dass ein Dehnungssensor eine Dehnung des Prüflings erfasst, wobei auch hier an dem Prüfling ein DMS vorgesehen sein kann. Vorzugsweise ist der Dehnungssensor in diesem Fall mit einer Sensorleitung verbunden, die durch das Prüfkammergehäuse aus dem Prüfkammergehäuse herausgeführt ist und mit einer entsprechenden Leistungsversorgung und/oder Steuer- und Auswerteeinheit verbunden sein kann. Möglich ist auch, dass ein Dehnungssensor vorgesehen ist, der die Dehnung der Beaufschlagungsstange erfasst. In diesem Fall kann der Dehnungssensor beispielsweise in einer Längsbohrung der Beaufschlagungsstange angeordnet sein, die in die Stirnseite der Beaufschlagungsstange eingebracht ist, die auf der von dem Prüfling abgewandten Seite der Beaufschlagungsstange angeordnet ist.

Die vorgenannten Kraft- und Dehnungssensoren können alternativ oder kumulativ vorhanden sein. Möglich ist auch, dass für eine Kalibrierung der Sensoren mehrere der vorgenannten Sensoren Einsatz finden, wobei dann nach der Kalibrierung auch eine Verwendung einer reduzierten Zahl von Sensoren möglich ist.

Die Beaufschlagungskraft, die von einem Aktuator auf die Kraftübertragungseinrichtungen aufgebracht wird, teilt sich in parallelen Kraftflüssen auf in zwei Beaufschlagungskraftkomponenten:

Mit einer ersten Beaufschlagungskraftkomponente wird dann die Beaufschlagungsstange und damit der Prüfling beaufschlagt.

Hingegen wirkt die zweite Beaufschlagungskraftkomponente auf die Dichthülse und das Prüfkammergehäuse.

Die Summe der Beaufschlagungskraftkomponenten entspricht der von dem Aktuator erzeugten Beaufschlagungskraft. Die Verteilung der Beaufschlagungskraft auf die beiden Beaufschlagungskraftkomponenten ist abhängig von den Steifigkeiten der Dichthülse, der Beaufschlagungsstange und des Prüflings, dem E-Modul der hierfür eingesetzten Materialien und den Querschnittsflächen derselben.

Hierbei ist für die Wahl der Materialien und die Auslegung der Abmessungen der Dichthülse und der Beaufschlagungsstange unter Umständen ein Zielkonflikt zu lösen:

Einerseits soll u. U. ermöglicht werden, dass die zweite Beaufschlagungskraftkomponente klein ist, so dass die den Prüfling beanspruchende erste Beaufschlagungskraftkomponente den überwiegenden Anteil der Beaufschlagungskraft nutzen kann und ein verhältnismäßig kleiner Aktuator mit einer kleinen Leistungsaufnahme verwendet werden kann.

Andererseits muss u. U. die Dichthülse geeignet sein, dem innenliegend in dem Zwischenraum wirkenden Druck des Mediums ausgesetzt zu werden, was erfordert, dass eine Mindestwandstärke der Dichthülse vorhanden ist, die aber wiederum eine Mindest-Beaufschlagungskraftkomponente in der Dichthülse zur Folge hat.

Für eine vorteilhafte Wahl der Materialien, insbesondere zur Lösung des zuvor erläuterten Zielkonflikts, ist die Dichthülse aus einer Titanlegierung hergestellt, während die Beaufschlagungsstange aus Stahl hergestellt ist.

Für eine Wahl der Materialien für die Dichthülse und die Beaufschlagungsstange zur Lösung des genannten Zielkonflikts schlägt eine Ausgestaltung der Erfindung vor, dass der E-Modul des Materials der Beaufschlagungsstangen mindestens 20 % (oder mindestens 30%, mindestens 40%, mindestens 50% oder sogar mindestens 80%) höher ist als der E-Modul des Materials der Dichthülsen. Alternativ oder zusätzlich kann die Zugfestigkeit des Materials der Beaufschlagungsstangen mindestens 20 % (oder mindestens 30%, mindestens 40%, mindestens 50% oder sogar mindestens 80%) niedriger sein als die Zugfestigkeit des Materials der Dichthülsen. Auch möglich ist, dass die Streckgrenze des Materials der Beaufschlagungsstangen mindestens 20 % (oder mindestens 30%, mindestens 40%, mindestens 50% oder sogar mindestens 80%) niedriger ist als die Streckgrenze des Materials der Dichthülsen. Diese Auslegungen der E-Module und/oder der Zugfestigkeiten und/oder der Streckgrenzen hat sich als vorteilhaft hinsichtlich der Gestaltung der mechanischen Übertragung, der Aufteilung der Beaufschlagungskraft auf die Beaufschlagungskraftkomponenten und der Gewährleistung der Festigkeit der Dichthülse bei der überlagerten mechanischen Beanspruchung und der Innendruckbeaufschlagung mit dem Medium herausgestellt.

Für diese oder andere Materialen und/oder Auslegungen hat sich als vorteilhaft herausgestellt, wenn die Beaufschlagungsstangen einen Durchmesser im Bereich von 28 mm +/- 5 mm (vorzugsweise +/- 3 mm oder +/- 2 mm) aufweisen, womit die Beaufschlagungsstangen einen verhältnismäßig geringen Durchmesser aufweisen. Dies führt dann zu verhältnismäßig kleinen Spannungen in den Wandungen der Dichthülse. In diesem Fall kann eine Dichthülse Einsatz finden, deren Wandstärke 7 mm +/- 2 mm (vorzugsweise +/- 1 mm oder +/- 0,5 mm) betragen kann. Die Abmessungen der Beaufschlagungsstangen und der Dichthülsen können aber auch (insbesondere für andere Drücke des Mediums während der Prüfung und/oder andere Beanspruchungen) von den genannten Abmessungen abweichen.

Grundsätzlich kann das Medium in der Prüfkammer einen beliebigen Druck aufweisen. Vorzugsweise ist in der Medium-Beanspruchungs-Prüfeinrichtung eine Druckquelle vorhanden, mittels welcher die Prüfkammer mit dem Medium mit einem Druck von mindestens 700 bar (insbesondere mindestens 800 bar oder sogar mindestens 1000 bar) beaufschlagbar ist. Bei dieser Druckquelle kann es sich um einen größeren Druckbehälter handeln, in welchen dann mittels mindestens einer Pumpe über einen längeren Zeitraum das Medium gefördert werden kann, bis ein entsprechender Druck erzeugt worden ist. Ebenfalls möglich ist, dass die Druckquelle eine ein- oder mehrstufige Pumpeneinrichtung ist, über welcher die genannten Drücke herbeigeführt werden können.

In einer derartigen Medium-Beanspruchungs-Prüfeinrichtung kann eine Kraftübertragungseinrichtung von einem Aktuator beaufschlagt werden. Vorzugsweise beträgt die Frequenz einer von dem Aktuator erzeugten Zug- und Druckkraft mindestens 50 Hz (vorzugsweise mindestens 60 Hz, mindestens 70 Hz, mindestens 80 Hz, mindestens 90 Hz oder sogar mindestens 100 Hz).

Alternativ oder kumulativ kann der Aktuator eine oszillierende Zug- und Druckkraft erzeugen, deren Beaufschlagungskraftamplitude mindestens 30 kN (insbesondere mindestens 40 kN, mindestens 50 kN oder sogar mindestens 60 kN) beträgt. Möglich ist aber auch eine statische oder quasistatische Beaufschlagung.

Hierbei kann ein beliebiger Aktuator Einsatz finden. Es kann sich bspw. um einen Shaker, einen hydraulischen Pulser oder einen beliebigen anderen, an sich aus dem Stand der Technik bekannten Aktuator handeln. Möglich ist aber auch, dass es sich bei dem Aktuator um einen sogenannten Resonanzprüfaktuator handelt. Bei einem derartigen Resonanzprüfaktuator ist an mindestens eine Kraftübertragungseinrichtung ein schwingungsfähiges System angekoppelt, welches mittels eines Schwingungserregers in der Resonanzfrequenz oder nahe derselben zu Resonanzschwingungen angeregt wird. Durch die Ankopplung des Schwingungssystems wird dann eine oszillierende Kraft des Schwingungssystems auf die Kraftübertragungseinrichtung aufgebracht, die dann die Beaufschlagungskraft bildet und mit einer Beaufschlagungskraftkomponente an den Prüfling weitergegeben wird. Beispiele für derartige Resonanzprüfungaktuatoren, die in die erfindungsgemäße Medium-Beanspruchungs-Prüfeinrichtung integriert werden können, sind insbesondere aus EP 3 505 907 B1 und DE 10 2020 060 955 B4 der Anmelderin bekannt.

In der Prüfkammer wirkt der Druck des Mediums auf eine Stirnseite der Beaufschlagungsstange und der Dichthülse. Dieser Druck führt zu einer Druckkraft, die zu einer statischen ersten und zweiten Beaufschlagungskraftkomponente führen kann, die dann bei der Prüfung des Prüflings der (für eine Wechselbeanspruchung oszillierenden) von dem Aktuator erzeugten Beaufschlagungskomponente überlagert ist, was unerwünscht sein kann oder zusätzliche Maßnahmen erfordern kann. Für einen Vorschlag der Erfindung ist die von dem Medium in der Prüfkammer auf die Stirnseite der Beaufschlagungsstange und/oder die Stirnseite der Dichthülse ausgeübte Druckkraft (zumindest teilweise) kompensiert. Dies kann auf einfache Weise dadurch erfolgen, dass der Druck des Mediums auch in dem Zwischenraum vorliegt. Ist dieser Zwischenraum zwischen Dichthülse und Beaufschlagungsstange auch mit der anderen Stirnseite der Beaufschlagungsstange oder Dichthülse fluidisch verbunden, wirkt auf die andere Stirnseite in einer von der Stirnseite begrenzten Kompensationskammer eine entgegengerichtete Druckkraft. Sind die auf den gegenüberliegenden Seiten angeordneten Stirnseiten der Beaufschlagungsstange oder der Dichthülse gleich groß, erfolgt eine vollständige Druckkraftkompensation, während für unterschiedliche Größen der Stirnseiten eine lediglich teilweise Kompensation erfolgen kann.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt. Sofern in einem Patentanspruch Merkmale über "und/oder" miteinander verknüpft sind, kann lediglich eines dieser Merkmale verwirklicht sein, es können mehrere dieser Merkmale in beliebiger Anzahl und/oder Kombination verwirklicht sein oder es können alle dieser Merkmale verwirklicht sein.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1          zeigt schematisch eine Medium-Beanspruchungs-Prüfeinrichtung in einem Längsschnitt.

Fig. 2 bis 4    zeigen Details II, III, IV der Medium-Beanspruchungs-Prüfeinrichtung gemäß Fig. 1.

Fig. 5          zeigt ein stark schematisiertes mechanisches Ersatzschaltbild einer Medium-Beanspruchungs-Prüfeinrichtung.

## FIGURENBESCHREIBUNG

In der Figurenbeschreibung werden Bauelemente und Komponenten derselben, die sich hinsichtlich der Geometrie, Gestaltung und/oder Funktion entsprechen oder ähneln, teilweise mit denselben Bezugszeichen gekennzeichnet, wobei diese dann mit den ergänzenden Buchstaben a, b, ... voneinander unterschieden sein können. In diesem Fall kann eine Bezugnahme auf diese Bauelemente oder Komponenten mit den Bezugszeichen und dem ergänzenden Buchstaben oder ohne den ergänzenden Buchstaben erfolgen, wobei im letztgenannten Fall dann

- eines dieser Bauelemente oder Komponenten,
- mehrere dieser Bauelemente oder Komponenten in beliebiger Anzahl oder
- sämtliche dieser Bauelemente oder Komponenten

gemeint sein können.

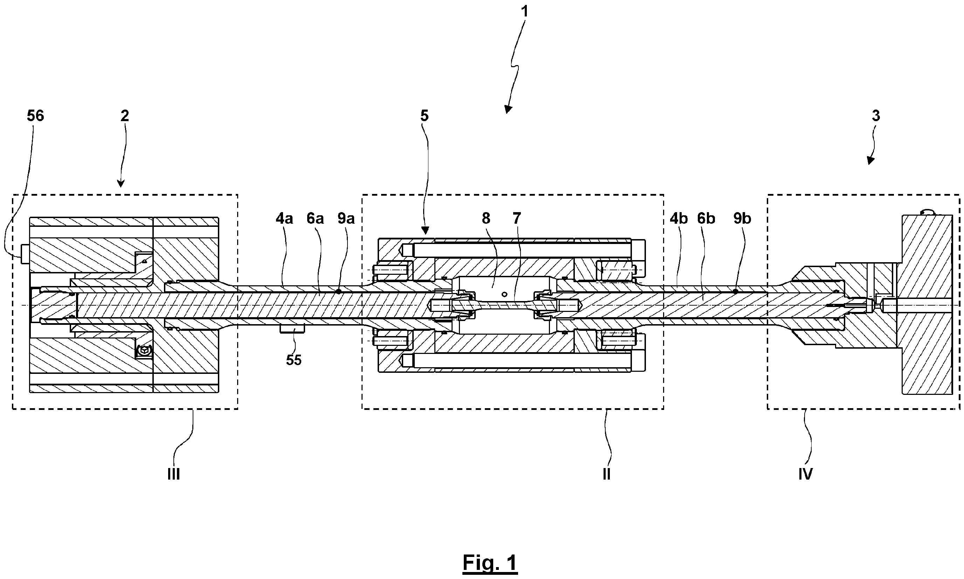

**Fig. 1** zeigt eine Medium-Beanspruchungs-Prüfeinrichtung 1 in einem Längsschnitt, bei der es sich vorzugsweise um eine Medium-Wechselbeanspruchungs-Prüfeinrichtung handelt. Die Medium-Beanspruchungs-Prüfeinrichtung 1 verfügt über Kraftübertragungseinrichtungen 2, 3. Die Kraftübertragungseinrichtung 2 ist über eine Dichthülse 4a mit einem Prüfkammergehäuse 5 fest verbunden und über eine Beaufschlagungsstange 6a fest mit einem Prüfling 7 verbunden. Das Prüfkammergehäuse 5 bildet eine Prüfkammer 8 aus, in der der Prüfling 7 angeordnet ist. Die Dichthülse 4a ist hohlzylindrisch ausgebildet und bildet mit der als Vollzylinder ausgebildeten Beaufschlagungsstange 6a einen hohlzylindrischen Zwischenraum 9a aus. Der Zwischenraum 9a verfügt über ein möglichst kleines Volumen und eine kleine Zwischenraumhöhe.

Auf entsprechende Weise ist die Kraftübertragungseinrichtung 3 über eine entsprechend ausgebildete Dichthülse 4b und eine entsprechend ausgebildete Beaufschlagungsstange 6b mit der anderen Seite des Prüfkammergehäuses 5 bzw. dem Prüfling 7 fest verbunden.

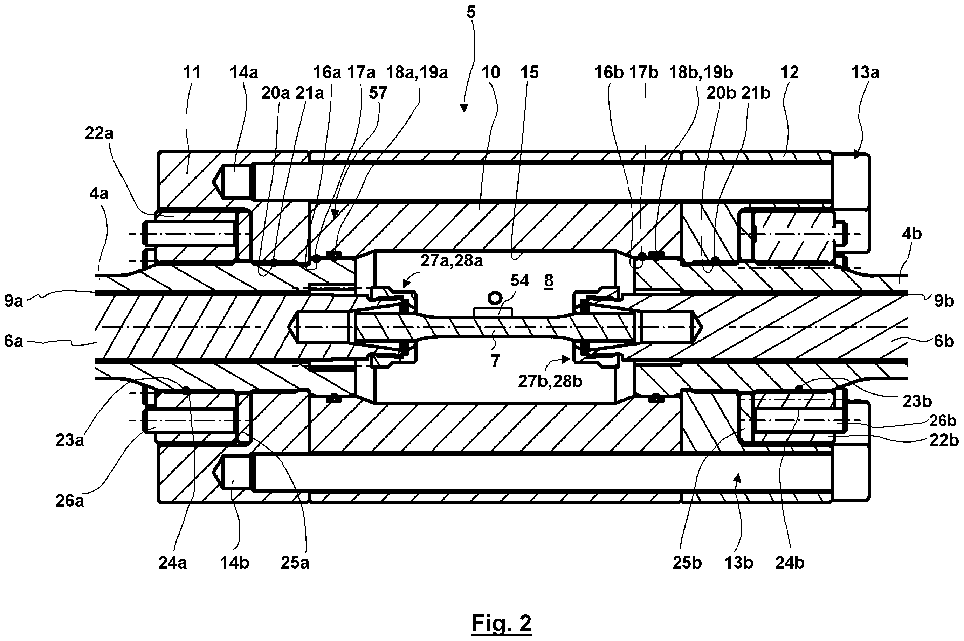

**Fig. 2** zeigt in einem Detail II die Medium-Beanspruchungs-Prüfeinrichtung 1 im Bereich des Prüfkammergehäuses 5. Das Prüfkammergehäuse 5 verfügt über ein Prüfkammergehäuse-Mittelteil 10 und zwei Prüferkammergehäuse-Seitenteile 11, 12. Das Prüfkammergehäuse-Mittelteil 10 und die Prüfkammergehäuse-Seitenteile 11, 12 sind über Zuganker bildende Schrauben 13a, 13b, ... fest miteinander verbunden. Zu diesem Zweck weisen das Prüfkammergehäuse-Seitenteil 12 und das Prüfkammergehäuse-Mittelteil 10 fluchtende Durchgangsbohrungen auf, durch welche sich die Schraube 13 hindurch erstreckt. Der einem Kopf der Schraube 13 abgewandte Endbereich der Schraube 13 ist mit einer Sackloch-Gewindebohrung 14a, 14b, ... des Prüfkammergehäuse-Seitenteils 11 verschraubt.

Das Prüfkammergehäuse-Mittelteil 10 verfügt über eine beidseitig offene Innenbohrung 15, im Bereich welcher das Prüfkammergehäuse-Mittelteil 10 die Prüfkammer 8 radial nach außen begrenzt. Für das dargestellte Ausführungsbeispiel ist die Innenbohrung 15 abgestuft und bildet in den außenliegenden Endbereichen zylindrische Dichtflächen 16a, 16 b aus. Die Dichtflächen 16a, 16b wirken zusammen mit zylindrischen Dichtflächen 17a, 17b, die von den dem Prüfling 7 zugewandten Endbereichen der Dichthülsen 4a, 4b ausgebildet werden. Im Bereich der Dichtflächen 16, 17 ist ein Dichtelement 18 angeordnet, bei dem es sich um einen in einer Nut mindestens einer Dichtfläche 16, 17 angeordneten Dichtring 19 handeln kann, wobei infolge der Drücke des Mediums auch eine Abstützung des Dichtrings an einem Stützring erfolgen kann.

Die Prüfkammergehäuse-Seitenteile 11, 12 verfügen ebenfalls über eine (abgestufte) Durchgangsbohrung, die hier ein inneres Gewinde 20a, 20b aufweisen. Die Gewinde 20 sind verschraubt mit äußeren Gewinden 21a, 21b der Dichthülsen 4a, 4b, die unmittelbar benachbart den Dichtflächen 17a, 17b angeordnet sind.

In einem Halblängsschnitt sind die Prüfkammergehäuse-Seitenteile 11, 12 L-förmig ausgebildet, wobei die Stirnseite des radial orientierten Schenkels des L das Gewinde 20 ausbildet. Die beiden Schenkel des L begrenzen einen umlaufenden Aufnahmeraum für eine Sicherungsmutter 22a, 22b.

Die Sicherungsmutter 22 verfügt über ein inneres Gewinde 23, welches verschraubt ist mit einem äußeren

EP 4 339 586 B1

Gewinde 24, welches benachbart dem Gewinde 21 von der Mantelfläche der Dichthülse 4 ausgebildet ist. Zwischen dem radial nach innen orientierten Schenkel des L der Prüfkammergehäuse-Seitenteile 11 und der Sicherungsmutter 22 ist eine Spannscheibe 25 angeordnet. Die Sicherungsmutter 22 verfügt über in Umfangsrichtung verteilte axiale durchgehende Gewindebohrungen, in welche Gewindestifte 26 eingeschraubt sind. Werden die Gewindeschrauben 26 so in die Gewindebohrungen der Sicherungsmutter 22 eingeschraubt, dass diese auf der der Spannscheibe 25 zugewandten Seite aus der Sicherungsmutter 22 heraustreten, werden die Stirnseiten der Gewindeschrauben 26 gegen die Spannscheibe 25 gedrückt. Die derart erzeugte Spannkraft drückt die Gewinde 20, 23 auseinander, womit die Schraubverbindungen im Bereich der Gewinde 20, 23 gegeneinander verspannt werden und eine Sicherung sowie eine Beseitigung eines etwaigen Gewindespiels erfolgt.

Der in die Prüfkammer 8 hineinragende Endbereich der Beaufschlagungsstange 6 ist über eine Spanneinrichtung 27 mit dem Prüfling 7 verbunden. Für das dargestellte Ausführungsbeispiel ist die Spanneinrichtung 27 als Konusspannfutter 28 ausgebildet.

Die Zwischenräume 9a, 9b zwischen den Beaufschlagungsstangen 6 und den Dichthülsen 4 münden wie dargestellt in die Prüfkammer 8.

Wie in Fig. 2 zu erkennen ist, ist das Prüfkammergehäuse 5 mit den beteiligten Bauelementen symmetrisch zu einer in Fig. zwei vertikal orientierten Mittelebene ausgebildet.

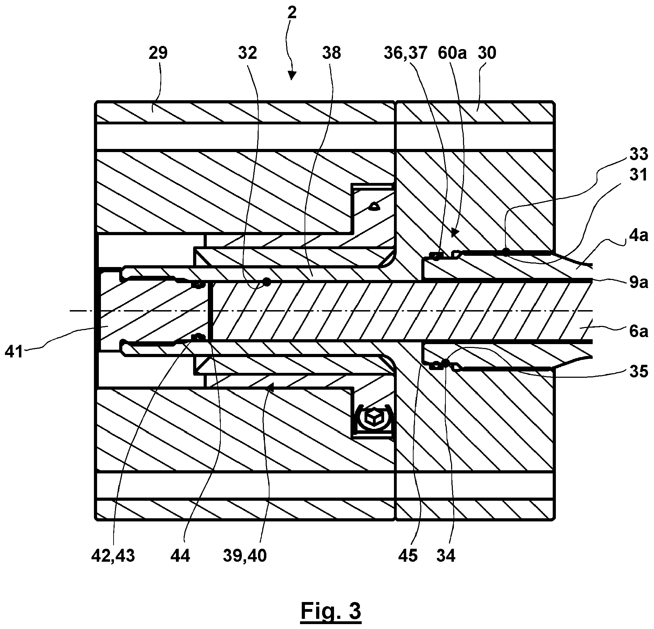

Fig. 3 zeigt ein Detail III der Medium-Beanspruchungs-Prüfeinrichtung 1 im Bereich der Kraftübertragungseinrichtung 2.

Die Kraftübertragungseinrichtung 2 weist zwei Gehäuseteile 29, 30 auf, die über Bohrungen und sich durch die Bohrungen erstreckende Schrauben in der Art von Zugankern miteinander und auf der dem Prüfkammergehäuse 5 abgewandten Seite mit einem Prüftisch, einer Halterung oder einem Aktuator verbunden werden können.

Das Gehäuseteil 30 verfügt über eine abgestufte Durchgangsbohrung, in welcher ein inneres Gewinde 31 über eine Stufe übergeht zu einer inneren Spannfläche 32, deren Durchmesser kleiner ist als der Durchmesser des inneren Gewindes 31. Das Gehäuseteil 30 verfügt dabei über einen L-förmigen Halblängsschnitt, wobei die Spannfläche 32 auf der Innenseite des Schenkels des L angeordnet ist, der parallel zur Längsachse orientiert ist, während der andere Schenkel des L radial nach außen orientiert ist und das Gewinde 31 im Übergangsbereich von den beiden Schenkeln des L angeordnet ist. Mit dem Gewinde 31 ist ein äußeres Gewinde 33 des zugeordneten Endbereichs der Dichthülse 4a verschraubt. Zwischen dem Gewinde 33 und der benachbarten Stirnseite bildet die Dichthülse 4a eine Dichtfläche 34 aus, die mit einer Dichtfläche 35 des Gehäuseteils 30, die dem Gewinde 31 vorgeordnet ist, zur Abdichtung zusammenwirkt. Für das dargestellte Ausführungsbeispiel ist in einer Nut der Dichtfläche 34 und/oder der Dichtfläche 35 ein Dichtelement 36, insbesondere ein Dichtring 37, angeordnet.

Der Schenkel des L des Gehäuseteils 30, welcher innenliegende die Spannfläche 32 ausbildet, bildet eine sich parallel zur Längsachse erstreckende Spannhülse 38. In die Spannhülse 38 erstreckt sich mit passgenauem Durchmesser die Beaufschlagungsstange 6a.

Die Spannhülse 38 ist umgeben von einem Ringspannelement 39, welches insbesondere als ETP-Buchse 40 ausgebildet ist. Das Ringspannelement 39 ist passgenau aufgenommen in einer abgestuften inneren Durchgangsbohrung des Gehäuseteils 29. Bei Betätigung des Ringspannelements 39 wird das Ringspannelement 39 radial gespreizt, womit dieses zwischen dem Gehäuseteil 39 und der Spannhülse 38 verspannt wird. Die so erzeugte radiale Spannkraft führt dazu, dass die Spannhülse 38 radial nach innen beaufschlagt wird und gegen die Mantelfläche der Beaufschlagungsstange 6a gepresst wird, so dass von der Spannhülse 38 und damit dem Gehäuseteil 30 und letzten Endes der Kraftübertragungseinrichtung 2 die Beaufschlagungsstange 6a festgehalten wird.

Die Spannhülse 38 setzt sich über die Stirnseite der Beaufschlagungsstange 6a hinaus fort. Der derart überstehende Endbereich der Spannhülse 38 ist durch einen abgedichteten Verschlusskörper 41 geschlossen.

Für das dargestellte Ausführungsbeispiel ist der Verschlusskörper 41 in ein Innengewinde des Endbereichs der Spannhülse 38 eingeschraubt, wobei ein Dichtelement 42 in Form eines Dichtrings 43 zwischen dem Verschlusskörper 41 und der Spannhülse 38 wirkt.

In Fig. 2 ist zu erkennen, dass auf die Stirnseite der Beaufschlagungsstange 6a der Druck in der Prüfkammer 8 wirkt, womit auf die Beaufschlagungsstange 6a eine in Fig. 2 nach links orientierte Druckkraft ausgeübt wird. Der Druck in der Prüfkammer 8 wird über den Zwischenraum 9a auch zu der anderen Stirnseite der Beaufschlagungsstange 6b, die in Fig. 3 zu erkennen ist, übertragen, womit dieser Druck auch anliegt in einer Kompensationskammer 44, die radial außenliegend von der Spannhülse 38 begrenzt wird und in axialer Richtung von der Stirnfläche der Beaufschlagungsstange 6a sowie der benachbarten Stirnfläche des Verschlusskörpers 41 begrenzt wird. Der in der Kompensationskammer 44 vorliegende Druck, der dem Druck in der Prüfkammer 8 entspricht, erzeugt eine in Fig. 3 nach rechts orientierte Druckkraft, die die an der anderen Stirnseite erzeugte Druckkraft (teilweise oder vollständig) kompensiert.

In der Prüfkammer 8 wirkt der Druck des Mediums auch auf die Dichthülse 4a im Bereich der kreisringförmigen Stirnfläche, womit auf die Dichthülse 4a eine Druckkraft ausgeübt wird, die in Fig. 2 nach links orientiert ist. Der Druck in der Prüfkammer 8 wird über den Zwischenraum 9a auch in die Kraftübertragungseinrichtung 2 gemäß Fig. 3 übertragen zu einer Kompensationskammer 45, deren Innendurchmesser dem Innendurchmesser der Dichthülse 4a entspricht, deren Außendurchmesser dem Durchmesser des Dichtelements 36 entspricht und die axial begrenzt ist einerseits von dem Gehäuseteil 30 und andererseits von der Stirnseite der Dichthülse 4a. In der Kompensationskammer 45 erzeugt der Druck, der dem Druck in der Prüfkammer 8 entspricht, eine in Fig. 3 nach rechts orientierte Druckkraft, die die zuvor erläuterte, in der Prüfkammer 8 hervorgerufene Druckkraft, die auf die Dichthülse 4a wirkt, zumindest teilweise kompensiert.

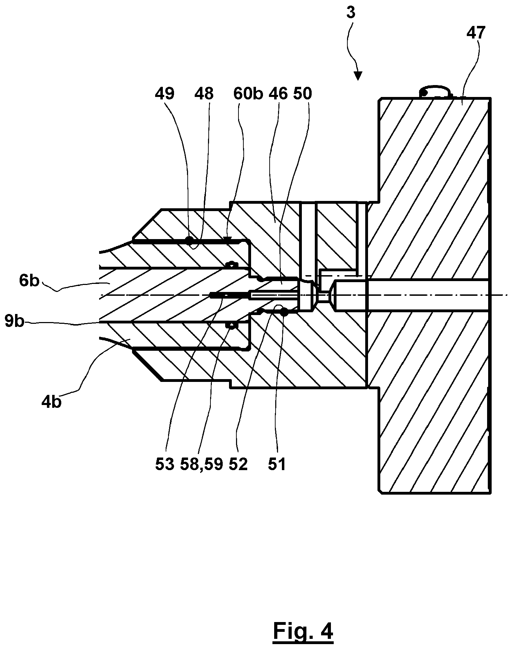

**Fig. 4** zeigt die Medium-Beanspruchungs-Prüfeinrichtung 1 in einem Detail IV, nämlich im Bereich der Kraftübertragungseinrichtung 3. Die Kraftübertragungseinrichtung 3 verfügt über Gehäuseteile 46, 47. Die Gehäuseteile 46, 47 sind auf hier nicht dargestellte Weise fest miteinander verbunden, insbesondere verschraubt. Das Gehäuseteil 46 verfügt über ein inneres Gewinde 48, welches mit einem äußeren Gewinde 49 des zugeordneten Endbereichs der Dichthülse 4b verschraubt ist, wobei die Stirnseite der Dichthülse 4b mit einer Stufe des Gehäuseteils 46 über die Verschraubung verspannt ist.

Die Beaufschlagungsstange 6b verfügt über einen endseitigen Zapfen 50 mit einem äußeren Gewinde 51. Das äußere Gewinde 51 des Zapfens 50 ist eingeschraubt in ein inneres Gewinde 52 des Gehäuseteils 46, wobei mit dem Einschrauben die Stufe, über die der Zapfen 50 übergeht in den benachbarten Teil der Beaufschlagungsstange 6b, mit der zuvor genannten Stufe des Gehäuseteils 46 verspannt ist.

Für das dargestellte Ausführungsbeispiel weist die dem Prüfling 7 abgewandte Stirnseite der Beaufschlagungsstange 6b eine (hier abgestufte) Sackloch-Bohrung auf, in der ein Dehnungssensor 53 angeordnet sein kann. Der Dehnungssensor 53 kann mit der Beaufschlagungsstange 4b verklebt sein und eine Längsdehnung der Beaufschlagungsstange 4b infolge der ersten Beaufschlagungskraftkomponente messen.

Ebenfalls möglich ist, dass die Medium-Beanspruchungs-Prüfeinrichtung 1 einen Dehnungssensor 54 aufweist (vgl. Fig. 2), mittels dessen die Dehnung des Prüflings 7 gemessen wird.

Alternativ oder kumulativ kann ein Dehnungssensor 55 die Dehnung der Dichthülse 4 erfassen (vgl. Fig. 1).

Vorzugsweise handelt es sich bei den Dehnungssensoren 54, 55 um DMS, welche an der Mantelfläche des Prüflings 7 bzw. der Mantelfläche der Dichthülse 4 befestigt sind.

Möglich ist alternativ oder kumulativ, dass im Bereich einer Kraftübertragungseinrichtung 2, 3 ein Kraftsensor 56 angeordnet ist (vgl. Fig. 1), mittels dessen die Beaufschlagungskraft, die von dem Aktuator erzeugt wird, gemessen wird. Der Kraftsensor 56 kann dabei in beliebiger Weise in den Kraftfluss zwischen dem Aktuator und der Kraftübertragungseinrichtung 2, 3 integriert sein.

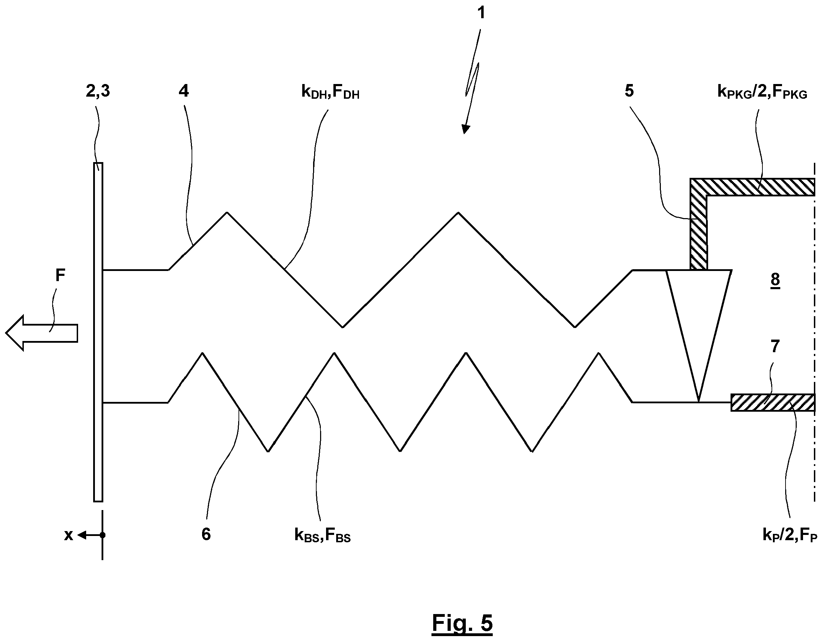

**Fig. 5** zeigt ein mechanisches Ersatzschaltbild der Medium-Beanspruchungs-Prüfeinrichtung 1, wobei angesichts des hinsichtlich des Prüfkammergehäuses 5, der Dichthülsen 4 und der Beaufschlagungsstangen 6 symmetrischen Aufbaus hier lediglich eine Hälfte der Medium-Beanspruchungs-Prüfeinrichtung 1 modelliert ist.

Der Aktuator beaufschlagt die Kraftübertragungseinrichtung 2, 3 mit einer Beaufschlagungskraft F, was dazu führt, dass es zu einer (im Fall einer Wechselbeanspruchung oszillierenden) Bewegung x der Kraftübertragungseinrichtung 2, 3 kommt. Die Dichthülse 4 ist mit einer Längsfeder dargestellt, deren Längssteifigkeit mit $k_{DH}$ bezeichnet ist. Die Beaufschlagungskraftkomponente, mit welcher die Dichthülse 4 beaufschlagt ist, ist mit $F_{DH}$ bezeichnet. Entsprechend ist die Beaufschlagungsstange 6 mit einer Längsfeder dargestellt, deren Längssteifigkeit als $k_{BS}$ bezeichnet ist. Die Beaufschlagungskraftkomponente, mit welcher die Beaufschlagungsstange 6 beaufschlagt ist, ist mit $F_{BS}$ bezeichnet. Die Längssteifigkeit des Prüfkammergehäuses 5 ist mit $k_{PKG}$ bezeichnet, während die auf das Prüfkammergehäuse 5 wirkende Längskraft mit $F_{PKG}$ bezeichnet ist. Schließlich ist die Längssteifigkeit des Prüflings 7 mit $k_P$ bezeichnet, während die auf den Prüfling 7 wirkende Längskraft mit $F_P$ bezeichnet ist. Da in Fig. 5 wegen des symmetrischen Aufbaus lediglich das mechanische Ersatzschaltbild für eine Hälfte der Medium-Beanspruchungs-Prüfeinrichtung 1 dargestellt ist, werden hier die Hälften der Längssteifigkeiten $k_{PKG/2}$ sowie $k_{P/2}$ wirksam. Die Dichthülse 4 und das Prüfkammergehäuse 5 sind im Kraftfluss der zweiten Beanspruchungskraftkomponente in Reihenschaltung angeordnet, womit gilt

$$F_P = F_{BS}.$$

Entsprechend sind die Beaufschlagungsstange 6 und der Prüfling 7 in mechanischer Reihenschaltung im Kraftfluss angeordnet, so dass

$$F_{PKG} = F_{DH}$$

gilt. Für die Aufteilung der Beaufschlagungskraft F auf die Beaufschlagungskraftkomponenten $F_{DH}$, $F_{BS}$ gilt

$$F = F_{DH} + F_{BS}.$$

Für den Federweg x in dem ersten Beaufschlagungspfad gilt

$$x = F_{BS} / k_{BS} + 2\, F_P / k_P,$$

während für den zweiten Beaufschlagungskraftpfad gilt:

$$x = F_{DH} / k_{DH} + 2\, F_{PKG} / k_{PGK},$$

Zur Vereinfachung wird im Folgenden die Annahme getroffen, dass $K_{PGK} \gg k_{DH}, k_{BS}, k_P$.

Aus der Gleichsetzung der Wege x für die beiden Beaufschlagungskraftpfade folgt mit dieser vereinfachenden Annahme,

$$F = F_{BS} / k_{BS} + 2\, F_{BS} / k_P = F_{DH} / k_{DH} \quad.$$

Aus obigen Gleichungen folgt dann für die ersten Beaufschlagungskraftkomponente $F_{BS}$ in der Beaufschlagungsstange 6 (und damit auch für die auf den Prüfling 7 wirkende Längskraft $F_P$)

$$F_P = F_{BS} = F / (k_{DH}\ (1/k_{BS} + 2\, K_P + 1 / k_{DH})) \quad.$$

Für den ersten theoretischen Sonderfall, dass die Längssteifigkeit $K_{DH}$ unendlich ist, also eine ideal starre Dichthülse 4 vorliegt, entspricht die zweite Beanspruchungskraftkomponente in der Dichthülse 4 der Beanspruchungskraft F, während der Prüfling 7 nicht mit einer ersten Beanspruchungskraftkomponente $F_P$ beaufschlagt wird, so dass $F_P = 0$ gilt. Hingegen ist für einen zweiten theoretischen Sonderfall die Längssteifigkeit $k_{DH}$ Null, womit die erste Beanspruchungskraftkomponente $F_P$ der Beanspruchungskraft F entspricht, so dass $F_P = F$ gilt. Für realistische Werte der Längssteifigkeit $k_{DH}$ gilt dann entsprechend obiger Formel

$$0 <= F_P < F,$$

wobei die Aufteilung der Beanspruchungskraft F auf die beiden Beanspruchungskraftkomponenten von den Längssteifigkeiten $k_{DH}$, $k_{BS}$ und $k_P$ abhängt.

In obigen Formeln ist die Längssteifigkeit k repräsentiert durch den Quotienten aus der wirkenden Kraft und der sich darauf ergebenden Verschiebung x. In der Praxis ergeben sich die Längssteifigkeiten k einerseits aus dem E-Modul der für die Dichthülse 4 und die Beaufschlagungsstange 6 genutzten Materialien und der Querschnittsfläche einerseits der Dichthülse 4 und andererseits der Beaufschlagungsstange 6.

Möglich ist, dass die Beaufschlagungsstange 6 aus einem Stahl Cf53 hergestellt ist mit einem E-Modul von ca. 212.000 N/mm$^2$, einer Zugfestigkeit im Bereich von 610-760 N/mm$^2$ und einer Streckgrenze von ca. 340 N/mm$^2$, wobei vorzugsweise die Beaufschlagungsstange 6 eine Härte von mindestens 50 HRC oder mindestens 55 HRC aufweist und möglich ist, dass die Oberfläche der Beaufschlagungsstange 6 geschliffen ist.

Der Durchmesser der Beaufschlagungsstange 6 kann 28 mm +/- 5 mm betragen. Vorzugsweise beträgt die Amplitude der ersten Beanspruchungskraftkomponente $F_P$ des Prüflings 7 16 kN +/-6 kN oder +/- 3 kN. Die Amplitude der ersten Beanspruchungskraftkomponente $F_P$ kann aber durchaus größer sein, beispielsweise größer als 30 kN, größer als 40 kN oder sogar größer 50kN.

Für diese Ausgestaltung der Beaufschlagungsstange 6 (oder auch andere Ausgestaltungen derselben) kann die Dichthülse 4 aus einer Titanlegierung hergestellt sein, wobei vorzugsweise ein Material Titan Grade 5 (Ti6Al4V) mit einem E-Modul von 110.000 N/mm$^2$ und einer Zugfestigkeit von ca. 900 N/mm$^2$ und einer Streckgrenze von ca. 830 N/mm$^2$ zum Einsatz kommt. Die Dichthülse 4 kann in diesem oder anderen Fällen einen Innendurchmesser von 28 mm mindestens mit einer Spielpassung zu dem Außendurchmesser der Beanspruchungsstange 6 aufweisen, während die Dichthülse einen Außendurchmesser von 44 mm aufweisen kann. Möglich sind aber auch jeweils Abweichungen von +/- 5 mm oder +/- 3 mm von dem genannten Innen- und/oder Außendurchmesser.

Die Länge der Beaufschlagungsstange 6 einschließlich der Spanneinrichtung 27 kann 450 mm +/- 50 mm oder +/- 20 mm betragen, während die Länge der Dichthülse 4 330 mm +/- 50 mm oder +/- 30 mm betragen kann.

Bei der Auslegung ist zu beachten, dass die in der Wandung der Dichthülse 4 wirkenden Umfangs- und Axialspannungen kleiner sind, wenn der Innendurchmesser der Dichthülse 4 kleiner ist. Andererseits muss die Wandstärkt der Dichthülse 4 hinreichend groß gewählt werden, damit die Dichthülse 4 auch bei der überlagerten Beanspruchung infolge der zweiten Beanspruchungskraftkomponente und des in dem Zwischenraum 9 wirkenden hohen Drucks die erforderliche Festigkeit aufweist. Diese Beanspruchung erfordert u. U. eine Erhöhung der Längssteifigkeit $k_{DH}$, was zur Erhöhung der erforderlichen, von dem Aktuator aufzubringenden Beanspruchungskraft F führt.

Für die Dichthülse 4 wird vorzugsweise ein Werkstoff eingesetzt, dessen E-Modul kleiner ist als das E-Modul des Materials der Beaufschlagungsstange 6, wobei der Werkstoff eine hohe Schwingfestigkeit aufweisen sollte.

Vorzugsweise beträgt die Amplitude x 0,1 mm oder 0,2 mm (jeweils +/- 50 % oder +/- 40 % oder +/- 30 % oder +/- 20 % oder +/- 10 %).

Da die Dichthülse 4 mit dem Innendruck beaufschlagt ist, ist vorzugsweise die Schwingfestigkeit der Beaufschlagungsstange 6 und/oder des Prüflings 7 kleiner als die Schwingfestigkeit der Dichthülse 4.

Wird eine Dichthülse 4 mit einem E-Modul verwendet, der kleiner ist als der E-Modul der Beaufschlagungsstange 6, wie das für die zuvor genannte Materialkombination der Fall ist, sind die durch die Längung erzeugten Spannungen in der Dichthülse 4 kleiner als die Spannungen in der Beaufschlagungsstange 6. Bei Verwendung einer beliebigen Titanlegierung mit hoher Schwingfestigkeit kann dann eine ausreichende Reserve verbleiben, um auch Prüflinge 7 aus Hochleistungswerkstoffen zu prüfen. Finden hingegen Prüflinge 7 aus einem Werkstoff mit geringerer Schwingfestigkeit Einsatz, ist auch möglich, dass die Dichthülse 4 aus Stahl oder einer Stahllegierung hergestellt ist.

Bei dem Dehnungssensor 53, der in einer stirnseitigen Sackloch-Bohrung der Beaufschlagungsstange 6 angeordnet ist, kann es sich beispielsweise um einen Dehnungssensor auf Grundlage eines DMS handeln, wie dieser beispielsweise auf der Website

https://www.hbm.com/de/7452/dehnungsmessstreifen-fuer-messungen-inschrauben/?product type_no=LB11/TB21%20Dehnungsmessstreifen%20f%C3%B Cr%20Messungen%20in%20Schrauben

(Datum der Einsichtnahme: 12.09.2022)

angeboten wird.

Durch die Verringerung des E-Moduls der Dichthülse 4 kann die Verteilung der Beanspruchungskraft auf die Beanspruchungskraftkomponenten vorteilhaft so verändert werden, dass sich ein verringerter Kraftnebenfluss über die zweite Beanspruchungskraftkomponente ergibt.

Die Abdichtung der Prüfkammer 8 und der Zwischenräume 9 zwischen den Dichthülsen 4 und dem Prüfkammergehäuse 5 erfolgt über eine Prüfkammer-Dichteinrichtung 57, welche für das dargestellte Ausführungsbeispiel gebildet ist mit den Dichtflächen 16, 17 und dem Dichtelement 18. Möglich ist aber auch, dass eine andere dichtende Befestigung, beispielsweise mittels Verkleben, einer aushärtenden Dichtmasse, einer Verschweißung oder einer dichten Verschraubung erfolgt.

Die Abdichtung des Zwischenraums 9b im Bereich der Kraftübertragungseinrichtung 3 erfolgt über ein Dichtelement 58, bei dem es sich vorzugsweise um einen Dichtring 59 handelt, welches zwischen dem Endbereich der Dichthülse 4b und der Beaufschlagungsstange 6b wirkt. Auf diese Weise ist eine Kraftübertragungseinrichtungs-Dichteinrichtung 60b gebildet. Hingegen ist für die Kraftübertragungseinrichtung 2 die Kraftübertragungseinrichtungs-Dichteinrichtung 60a von den Dichtflächen 34, 35 und dem Dichtelement 36 gebildet, wobei auch der Verschlusskörper 41, der gegebenenfalls auch mit einem Dichtelement 42 oder Dichtring 43 gegenüber der Dichthülse 4a abgedichtet sein kann, Bestandteil der Kraftübertragungseinrichtungs-Dichteinrichtung 60a sein kann.

Vorzugsweise sind die Bauelemente der Medium-Beanspruchungs-Prüfeinrichtung 1, die mit dem Medium, insbesondere Wasserstoff, beaufschlagt sind (insbesondere das Prüfkammergehäuse, die Beaufschlagungsstangen und/oder die Dichthülsen), zum Schutz mit einer Beschichtung versehen und/oder mit einer Oberflächenbehandlung behandelt, bspw. einer Kaltverfestigung, insbesondere mit einem Verfestigungs-Strahlverfahren. Um lediglich einige nicht beschränkende Beispiele zu nennen, kann eine Beschichtung mit Kunststoff, Metall, mit dem Material $\alpha$-Al2O3, mit MAX-Phasen-Schichten, (beispielsweise aus Titan, Aluminium und Stickstoff (Ti2AlN)), eine Zinklamellenbeschichtung oder eine Kombination aus Zink- und Aluminiumlamellen (gem. DIN EN ISO 10683 oder DIN EN 13858), die durch eine anorganische Matrix verbunden sind, zum Einsatz kommen.

**BEZUGSZEICHENLISTE**

1 Medium-Beanspruchungs-Prüfeinrichtung
2 Kraftübertragungseinrichtung
3 Kraftübertragungseinrichtung
4 Dichthülse

| 5 | Prüfkammergehäuse |
|---|---|
| 6 | Beaufschlagungsstange |
| 7 | Prüfling |
| 8 | Prüfkammer |
| 9 | Zwischenraum |
| 10 | Prüfkammergehäuse-Mittelteil |
| 11 | Prüfkammergehäuse-Seitenteil |
| 12 | Prüfkammergehäuse-Seitenteil |
| 13 | Schraube |
| 14 | Sackloch-Gewindebohrung |
| 15 | Innenbohrung |
| 16 | Dichtfläche |
| 17 | Dichtfläche |
| 18 | Dichtelement |
| 19 | Dichtring |
| 20 | inneres Gewinde |
| 21 | äußeres Gewinde |
| 22 | Sicherungsmutter |
| 23 | Inneres Gewinde |
| 24 | äußeres Gewinde |
| 25 | Spannscheibe |
| 26 | Gewindeschraube |
| 27 | Spanneinrichtung |
| 28 | Konusspannfutter |
| 29 | Gehäuseteil |
| 30 | Gehäuseteil |
| 31 | inneres Gewinde |
| 32 | Spannfläche |
| 33 | äußeres Gewinde |
| 34 | Dichtfläche |
| 35 | Dichtfläche |
| 36 | Dichtelement |
| 37 | Dichtring |
| 38 | Spannhülse |
| 39 | Ringspannelement |
| 40 | ETP-Buchse |
| 41 | Verschlusskörper |
| 42 | Dichtelement |
| 43 | Dichtring |
| 44 | Kompensationskammer |
| 45 | Kompensationskammer |
| 46 | Gehäuseteil |
| 47 | Gehäuseteil |
| 48 | inneres Gewinde |
| 49 | äußeres Gewinde |
| 50 | Zapfen |
| 51 | äußeres Gewinde |
| 52 | inneres Gewinde |
| 53 | Dehnungssensor |
| 54 | Dehnungssensor |
| 55 | Dehnungssensor |
| 56 | Kraftsensor |
| 57 | Prüfkammer-Dichteinrichtung |
| 58 | Dichtelement |
| 59 | Dichtring |
| 60 | Kraftübertragungseinrichtungs-Dichteinrichtung |

**Patentansprüche**

1. Medium-Beanspruchungs-Prüfeinrichtung (1) mit

   a) einem Prüfkammergehäuse (5) mit einer Prüfkammer (8), in welcher ein Prüfling (7) mit einem Medium und einer mechanischen Beanspruchung beaufschlagt wird,
   b) Beaufschlagungsstangen (6), die jeweils in einem Endbereich fest mit einem Endbereich des Prüflings (7) verbunden sind und in dem anderen Endbereich fest mit einer zugeordneten Kraftübertragungseinrichtung (2; 3) verbunden sind,
   c) Dichthülsen (4),

      ca) die in einem Endbereich unter Abdichtung, insbesondere mittels einer Prüfkammer-Dichteinrichtung (57), fest mit dem Prüfkammergehäuse (5) verbunden sind,
      cb) die in dem anderen Endbereich unter Abdichtung, insbesondere mittels einer Kraftübertragungseinrichtungs-Dichteinrichtung (60), fest mit der zugeordneten Kraftübertragungseinrichtung (2; 3) verbunden sind und
      cc) durch die sich die Beaufschlagungsstangen (6) erstrecken, wobei zwischen den Beaufschlagungsstangen (6) und den Dichthülsen (4) jeweils ein mit der Prüfkammer (8) fluidisch verbundener Zwischenraum (9) ausgebildet ist,

   d) wobei die Prüfkammer (8) und die Zwischenräume (9) über die Abdichtungen, insbesondere die Prüfkammer-Dichteinrichtungen (57) und die Kraftübertragungseinrichtungs-Dichteinrichtungen (60), gegenüber der Umgebung abgedichtet sind.

2. Medium-Beanspruchungs-Prüfeinrichtung (1) nach Anspruch 1, **dadurch gekennzeichnet, dass** mindestens eine Dichthülse (4) und/oder mindestens eine Beaufschlagungsstange (6)

   a) über ein Ringspannelement (39) mit dem Prüfkammergehäuse (5) und/oder der Kraftübertragungseinrichtung (2; 3) verbunden sind/ist oder
   b) über eine hydraulische Spannbuchse mit dem Prüfkammergehäuse (5) und/oder der Kraftübertragungseinrichtung (2; 3) verbunden sind/ist, wobei vorzugsweise der Hydraulikdruck der Spannbuchse mittels eines Einschraubens einer Schraube rherbeigeführt wird, deren Stirnfläche als Kolben wirkt.

3. Medium-Beanspruchungs-Prüfeinrichtung (1) nach Anspruch 1 oder 2, **dadurch gekennzeichnet, dass** der Prüfling (7) über Spanneinrichtungen (27) mit den Beaufschlagungsstangen (6) verbunden ist, wobei die Spanneinrichtungen (27) vorzugsweise als Spannfutter, beispielsweise als Konusspannfutter (28), ausgebildet sind.

4. Medium-Beanspruchungs-Prüfeinrichtung (1) nach einem der vorhergehenden Ansprüche, **dadurch gekennzeichnet, dass** das Prüfkammergehäuse (5) und/oder die Kraftübertragungseinrichtung (2; 3) über eine Schraubverbindung mit mindestens einer Dichthülse (4) oder mindestens einer Beaufschlagungsstange (6) verbunden sind/ist, wobei die Schraubverbindung vorzugsweise mittels eine Sicherungsmutter (22) gesichert und/oder verspannt ist.

5. Medium-Beanspruchungs-Prüfeinrichtung (1) nach einem der vorhergehenden Ansprüche, **dadurch gekennzeichnet, dass** das Prüfkammergehäuse (5)

   a) ein Prüfkammergehäuse-Mittelteil (10) mit einer Durchgangsbohrung aufweist, durch die sich der Prüfling (7) erstreckt und die die Prüfkammer (8) radial nach außen begrenzt, und
   b) zwei Prüfkammergehäuse-Stirnteile (11, 12) aufweist, durch die sich jeweils eine Dichthülse (4) und/oder eine Beaufschlagungsstange (6) erstrecken/erstreckt,

   wobei vorzugsweise die Prüfkammer-Dichteinrichtung (57) eine Abdichtung zwischen dem Prüfkammergehäuse-Mittelteil (10) und der Dichthülse (4) gewährleistet.

6. Medium-Beanspruchungs-Prüfeinrichtung (1) nach Anspruch 5, **dadurch gekennzeichnet, dass** das Prüfkammergehäuse-Mittelteil (10) und die Prüfkammergehäuse-Stirnteile (11, 12) über Spannschrauben miteinander verbunden sind.

7. Medium-Beanspruchungs-Prüfeinrichtung (1) nach einem der vorhergehenden Ansprüche, **dadurch gekennzeich-**

**net, dass**

a) ein Kraftsensor (56) vorgesehen ist, welcher die an einer Kraftübertragungseinrichtung (2;3), einer Dichthülse (4) oder einer Beaufschlagungsstange (6) wirkende Beaufschlagungskraft oder Beaufschlagungskraftkomponente erfasst, und/oder
b) ein Dehnungssensor (55) vorgesehen ist, welcher eine Dehnung einer Dichthülse (4) erfasst, und/oder
c) ein Dehnungssensor (54) vorgesehen ist, welcher eine Dehnung des Prüflings (7) erfasst, und/oder
d) ein Dehnungssensor (53) vorgesehen ist, welcher eine Dehnung der Beaufschlagungsstange (6) erfasst, wobei der Dehnungssensor (53) vorzugsweise in einer Längsbohrung der Beaufschlagungsstange (6) angeordnet ist.

8. Medium-Beanspruchungs-Prüfeinrichtung (1) nach einem der vorhergehenden Ansprüche, **dadurch gekennzeichnet, dass**

a) mindestens eine Dichthülse (4) aus einer Titanlegierung und/oder
b) mindestens eine Beaufschlagungsstange (6) aus Stahl

hergestellt ist.

9. Medium-Beanspruchungs-Prüfeinrichtung (1) nach einem der vorhergehenden Ansprüche, **dadurch gekennzeichnet, dass**

a) der E-Modul des Materials der Beaufschlagungsstangen (6) mindestens 20% höher ist als der E-Modul des Materials der Dichthülsen (4) und/oder
b) die Zugfestigkeit des Materials der Beaufschlagungsstangen (6) mindestens 20% niedriger ist als die Zugfestigkeit des Materials der Dichthülsen (4) und/oder
c) die Streckgrenze des Materials der Beaufschlagungsstangen (6) mindestens 20% niedriger ist als die Streckgrenze des Materials der Dichthülsen (4).

10. Medium-Beanspruchungs-Prüfeinrichtung (1) nach einem der vorhergehenden Ansprüche, **dadurch gekennzeichnet, dass** die Beaufschlagungsstangen (6) einen Durchmesser im Bereich von 28 mm +/- 5 mm aufweisen und/oder die Dichthülse eine Wandstärke von 7 mm +/- 2 mm aufweist.

11. Medium-Beanspruchungs-Prüfeinrichtung (1) nach einem der vorhergehenden Ansprüche, **dadurch gekennzeichnet, dass** eine Druckquelle vorhanden ist, mittels welcher die Prüfkammer (8) mit dem Medium mit einem Druck von mindestens 700 bar beaufschlagbar ist.

12. Medium-Beanspruchungs-Prüfeinrichtung (1) nach einem der vorhergehenden Ansprüche, **dadurch gekennzeichnet, dass** eine Kraftübertragungseinrichtung (2;3) von einem Aktuator

a) mit einer mit einer Frequenz von mindestens 50 Hz oszillierenden Beanspruchungskraft in Form einer oszillierenden Zug- und Druckkraft und/oder
b) mit einer oszillierenden Beanspruchungskraft in Form einer oszillierenden Zug- und Druckkraft, deren Beaufschlagungskraftamplitude mindestens 30 kN beträgt,

beaufschlagt wird, wobei der Aktuator vorzugsweise als Resonanzprüfaktuator ausgebildet ist.

13. Medium-Beanspruchungs-Prüfeinrichtung (1) nach einem der vorhergehenden Ansprüche, **dadurch gekennzeichnet, dass** eine von dem Medium in der Prüfkammer (8) auf eine Stirnseite der Beaufschlagungsstange (6) und/oder eine Stirnseite der Dichthülse (4) ausgeübte Druckkraft zumindest teilweise kompensiert ist.

**Claims**

1. Medium biasing test device (1) with

a) a test chamber housing (5) with a test chamber (8) in which a specimen (7) is subjected to a medium and a mechanical load,

b) biasing bars (6), which are each fixedly connected in one end region to an end region of the specimen (7) and fixedly connected in the other end region to an associated force transmitting device (2; 3),

c) sealing sleeves (4),

ca) which are fixedly connected to the test chamber housing (5) in one end region with a provision of a sealing effect, in particular by means of a test chamber sealing device (57),

cb) which are fixedly connected to the associated force transmitting device (2; 3) in the other end region with a provision of a sealing effect, in particular by means of a force transmitting device sealing device (60), and

cc) through which the biasing bars (6) extend, wherein an intermediate space (9) is in each case formed between the biasing bars (6) and the sealing sleeves (4), the intermediate space (9) being fluidically connected to the test chamber (8),

d) wherein the test chamber (8) and the intermediate spaces (9) are sealed off from the environment by the sealing effects, in particular by the test chamber sealing devices (57) and the force transmitting device sealing devices (60).

2. Medium biasing test device (1) according to claim 1, **characterized in that** at least one sealing sleeve (4) and/or at least one biasing bar (6)

a) are/is connected to the test chamber housing (5) and/or the force transmitting device (2; 3) by a ring clamping element (39) or

b) are/is connected to the test chamber housing (5) and/or the force transmitting device (2; 3) by a hydraulic clamping bushing, wherein preferably the hydraulic pressure of the clamping bushing is caused by screwing in a screw, the end face of which acting as a piston.

3. Medium biasing test device (1) according to claim 1 or 2, **characterized in that** the specimen (7) is connected to the biasing bars (6) via clamping devices (27), the clamping devices (27) preferably being designed as clamping chucks, for example as conical clamping chucks (28).

4. Medium biasing test device (1) according to one of the preceding claims, **characterized in that** the test chamber housing (5) and/or the force transmitting device (2; 3) are/is connected to at least one sealing sleeve (4) or at least one biasing bar (6) via a screw connection, the screw connection preferably being secured and/or clamped by means of a lock nut (22).

5. Medium biasing test device (1) according to one of the preceding claims, **characterized in that** the test chamber housing (5)

a) comprises a test chamber housing center part (10) with a through bore through which the specimen (7) extends and which delimits the test chamber (8) radially outwards, and

b) comprises two test chamber housing front parts (11, 12), through each of which a sealing sleeve (4) and/or a biasing bar (6) extend(s),

wherein preferably the test chamber sealing device (57) provides a seal effect between the test chamber housing center part (10) and the sealing sleeve (4).

6. Medium biasing test device (1) according to claim 5, **characterized in that** the test chamber housing center part (10) and the test chamber housing front parts (11, 12) are connected to one another via clamping screws.

7. Medium biasing test device (1) according to one of the preceding claims, **characterized in that**

a) a force sensor (56) is provided, which senses the biasing force or biasing force component acting on a force transmitting device (2; 3), on a sealing sleeve (4) or on a biasing bar (6), and/or

b) a strain sensor (55) is provided, which senses a strain of a sealing sleeve (4), and/or

c) a strain sensor (54) is provided, which senses a strain of the specimen (7), and/or

d) a strain sensor (53) is provided, which senses a strain of the biasing bar (6), wherein the strain sensor (53) is preferably arranged in a longitudinal bore of the biasing bar (6).

8.  Medium biasing test device (1) according to one of the preceding claims, **characterized in that**

    a) at least one sealing sleeve (4) is made from a titanium alloy and/or
    b) at least one biasing bar (6) is made from steel.

9.  Medium biasing test device (1) according to one of the preceding claims, **characterized in that**

    a) the modulus of elasticity of the material of the biasing bars (6) is at least 20% higher than the modulus of elasticity of the material of the sealing sleeves (4) and/or
    b) the tensile strength of the material of the biasing bars (6) is at least 20% lower than the tensile strength of the material of the sealing sleeves (4) and/or
    c) the yield strength of the material of the biasing bars (6) is at least 20% lower than the yield strength of the material of the sealing sleeves (4).

10. Medium biasing test device (1) according to one of the preceding claims, **characterized in that** the biasing bars (6) have a diameter in the range of 28 mm +/- 5 mm and/or the sealing sleeve has a wall thickness of 7 mm +/- 2 mm.

11. Medium biasing test device (1) according to one of the preceding claims, **characterized in that** a pressure source is present by means of which the test chamber (8) can be biased by the medium at a pressure of at least 700 bar.

12. Medium biasing test device (1) according to one of the preceding claims, **characterized in that** a force transmitting device (2; 3) is biased by an actuator

    a) with an oscillating biasing force in the form of an oscillating tensile and compressive force oscillating at a frequency of at least 50 Hz and/or
    b) with an oscillating biasing force in the form of an oscillating tensile and compressive force, the biasing force amplitude being at least 30 kN,

    wherein the actuator is preferably designed as a resonance test actuator.

13. Medium biasing test device (1) according to one of the preceding claims, **characterized in that** a compressive force exerted by the medium in the test chamber (8) on a front face of the biasing bar (6) and/or a front face of the sealing sleeve (4) is at least partially compensated.

**Revendications**

1.  Dispositif de test de contrainte de milieu (1) avec

    a) un boîtier à chambre de test (5) avec une chambre de test (8) dans laquelle une éprouvette (7) est sollicitée avec un milieu et une sollicitation mécanique,
    b) des tiges de sollicitation (6) qui sont reliées chacune, au niveau d'une partie d'extrémité, fermement avec une partie d'extrémité de l'éprouvette (7) et qui sont reliées, au niveau de l'autre partie d'extrémité, fermement avec un dispositif de transmission de force (2 ; 3) correspondant,
    c) des manchons d'étanchéité (4)

        ca) qui sont reliés, au niveau d'une partie d'extrémité, de manière étanche, plus particulièrement au moyen d'un dispositif d'étanchéité de chambre de test (57), fermement avec le boîtier à chambre de test (5),
        cb) qui sont reliés, au niveau de l'autre partie d'extrémité, de manière étanche, plus particulièrement au moyen d'un dispositif de transmission de force (60), fermement avec le dispositif de transmission de force (2 ; 3) correspondant et
        cc) à travers lesquels s'étendent les tiges de sollicitation (6), dans lequel, entre les tiges de sollicitation (6) et manchons d'étanchéité (4) est réalisé respectivement un espace intermédiaire (9) relié de manière fluidique avec la chambre de test (8),

    d) dans lequel la chambre de test (8) et les espaces intermédiaires (9) sont étanchéifiés par rapport à l'environnement à l'aide de dispositifs d'étanchéité, plus particulièrement les dispositifs d'étanchéité de chambre de test (57) et les dispositifs d'étanchéité de dispositif de transmission de force (60).

**2.** Dispositif de test de contrainte de milieu (1) selon la revendication 1, **caractérisé en ce qu'**au moins un manchon d'étanchéité (4) et/ou au moins une tige de sollicitation (6)

a) sont/est relié(s) par l'intermédiaire d'un élément de serrage annulaire (39) avec le boîtier à chambre de test (5) et/ou le dispositif de transmission de force (2 ; 3) ou
b) sont/est relié(s) par l'intermédiaire d'une douille de serrage hydraulique avec le boîtier à chambre de test (5) et/ou le dispositif de transmission de force (2 ; 3), dans lequel, de préférence, la pression hydraulique de la douille de serrage est générée au moins du vissage d'une vis dont la face frontale agit comme un piston.

**3.** Dispositif de test de contrainte de milieu (1) selon la revendication 1 ou 2, **caractérisé en ce que** l'éprouvette (7) est reliée, par l'intermédiaire de dispositifs de serrage (27), avec les tiges de sollicitation (6), dans lequel les dispositifs de serrage (27) sont conçus de préférence comme des mandrins de serrage, par exemple des mandrins de serrage coniques (28).

**4.** Dispositif de test de contrainte de milieu (1) selon l'une des revendications précédentes, **caractérisé en ce que** le boîtier à chambre de test (5) et/ou le dispositif de transmission de force (2 ; 3) sont/est relié(s) par l'intermédiaire d'une liaison vissée avec au moins un manchon d'étanchéité (4) ou au moins une tige de sollicitation (6), dans lequel la liaison vissée est bloquée et/ou serrée de préférence au moyen d'un écrou de blocage (22).

**5.** Dispositif de test de contrainte de milieu (1) selon l'une des revendications précédentes, **caractérisé en ce que** le boîtier à chambre de test (5)

a) comprend une partie centrale de boîtier à chambre de test (10) avec un alésage de passage à travers lequel s'étend l'éprouvette (7), qui délimite la chambre de test (8) radialement vers l'extérieur et
b) deux parties frontales de boîtier à chambre de test (11, 12) à travers chacune desquelles s'étend un manchon d'étanchéité (4) et/ou une tige de sollicitation (6), dans lequel, de préférence, le dispositif d'étanchéité de chambre de test (57) assure

une étanchéité entre la partie centrale de boîtier à chambre de test (10) et le manchon d'étanchéité (4).

**6.** Dispositif de test de contrainte de milieu (1) selon la revendication 5, **caractérisé en ce que** la partie centrale de boîtier à chambre de test (10) et les parties frontales de boîtier à chambre de test (11, 12) sont reliées entre elles par des vis de serrage.

**7.** Dispositif de test de contrainte de milieu (1) selon l'une des revendications précédentes, **caractérisé en ce que**

a) un capteur de force (56) est prévu, qui mesure la force de sollicitation ou la composante de force de sollicitation agissant sur un dispositif de transmission de force (2 ; 3), un manchon d'étanchéité (4) ou une tige de sollicitation (6) et/ou
b) un capteur de dilatation (55) est prévu, qui mesure une dilatation d'un manchon d'étanchéité (4) et/ou
c) un capteur de dilatation (54) est prévu, qui mesure une dilatation de l'éprouvette (7) et/ou
d) un capteur de dilatation (53) est prévu, qui mesure une dilatation de la tige de sollicitation (6), dans lequel le capteur de dilatation (53) est disposé de préférence dans un alésage longitudinal de la tige de sollicitation (6).

**8.** Dispositif de test de contrainte de milieu (1) selon l'une des revendications précédentes, **caractérisé en ce que**

a) au moins un manchon d'étanchéité (4) est constitué d'un alliage de titane et/ou
b) au moins une tige de sollicitation (6) est constituée d'acier.

**9.** Dispositif de test de contrainte de milieu (1) selon l'une des revendications précédentes, **caractérisé en ce que**

a) le module d'élasticité du matériau des tiges de sollicitation (6) est supérieur d'au moins 20 % au module d'élasticité du matériau des manchons d'étanchéité (4) et/ou
b) la résistance à la traction du matériau des tiges de sollicitation (6) est inférieure d'au moins 20 % à la résistance à la traction du matériau des manchons d'étanchéité (4) et/ou
c) la limite élastique du matériau des tiges de sollicitation (6) est inférieure d'au moins 20 % à la limite élastique du matériau des manchons d'étanchéité (4).

**10.** Dispositif de test de contrainte de milieu (1) selon l'une des revendications précédentes, **caractérisé en ce que** les tiges de sollicitation (6) présentent un diamètre de l'ordre de 28 mm ± 5 mm et/ou le manchon d'étanchéité présente une épaisseur de paroi de 7 mm ± 2 mm.

**11.** Dispositif de test de contrainte de milieu (1) selon l'une des revendications précédentes, **caractérisé en ce qu'**une source de pression est présente, au moyen de laquelle la chambre de test (8) peut être sollicitée avec le milieu avec une pression d'au moins 700 bar.

**12.** Dispositif de test de contrainte de milieu (1) selon l'une des revendications précédentes, **caractérisé en ce qu'**un dispositif de transmission de force (2 ; 3) est sollicité par un actionneur

a) avec une force de sollicitation oscillant avec une fréquence d'au moins 50 Hz, sous la forme d'une force de traction et de compression oscillante et/ou
b) avec une force de sollicitation oscillante sous la forme d'une force de traction et de compression oscillante, dont l'amplitude de force de sollicitation est égale à au moins 30 kN,

dans lequel l'actionneur est conçu de préférence comme un actionneur de test à résonance.

**13.** Dispositif de test de contrainte de milieu (1) selon l'une des revendications précédentes, **caractérisé en ce qu'**une force de compression exercée par le milieu dans la chambre de test (8) sur une face frontale de la tige de sollicitation (6) et/ou une face frontale du manchon d'étanchéité (4) est compensée au moins partiellement.

Fig. 1

Fig. 2

EP 4 339 586 B1

29   32   2   38   36,37   60a   30

33
31

4a

9a

6a

41

42,43   44   39,40   45   34

35

**Fig. 3**

**Fig. 4**

EP 4 339 586 B1

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3746762 B1
- CN 103323337 A
- DE 2027306 A1
- EP 3505907 B1
- DE 102020060955 B4